Europäisches Patentamt

European Patent Office

Office européen des brevets

(19)

(11) Veröffentlichungsnummer: **0 221 391**
**B1**

(12) # EUROPÄISCHE PATENTSCHRIFT

(45) Veröffentlichungstag der Patentschrift: **30.01.91**

(51) Int. Cl.⁵: **B 01 D 1/06,** B 01 D 1/22,
F 28 F 27/00

(21) Anmeldenummer: **86114010.1**

(22) Anmeldetag: **09.10.86**

(54) Fallstromverdampfer.

(30) Priorität: **31.10.85 DE 3538759**

(43) Veröffentlichungstag der Anmeldung:
**13.05.87 Patentblatt 87/20**

(45) Bekanntmachung des Hinweises auf die
Patenterteilung:
**30.01.91 Patentblatt 91/05**

(84) Benannte Vertragsstaaten:
**AT BE FR NL SE**

(56) Entgegenhaltungen:
**DE-A-2 333 885**
**FR-A-1 272 236**
**US-A-4 199 537**

(73) Patentinhaber: **Fried. Krupp Gesellschaft mit
beschränkter Haftung
Altendorfer Strasse 103
D-4300 Essen 1 (DE)**

(72) Erfinder: **Niestroj, Joachim
Eggershover Gasse 24
D-4049 Rommerskirchen (DE)**

Courier Press, Leamington Spa, England.

**Beschreibung**

Die Erfindung betrifft einen Fallstromverdampfer mit in Rohrböden befestigten, beheizbaren Rohren, mit einer Verteilerkammer im oberen Teil des Verdampfers zum Zuführen und gleichmäßigen Verteilen der Flüssigkeit auf die Rohre des Verdampfers und mit Drosselelementen, die mit den Rohren des Verdampfers Ringspalte bilden, wodurch die einzudampfende Flüssigkeit den Innenflächen der Rohre zugeführt wird.

Um eine einwandfreie Arbeitsweise bei Fallstromverdampfern gewährleisten zu können, ist eine in jedem Heizrohr gleichmäßig strömende Flussigkeitsmenge und ein an den Rohrwänden gleichmäßiger und geschlossener Flüssigkeitsfilm erforderlich. Ungleichmäßige Flüssigkeitsbeaufschlagungen bewirken eine zu hohe Lösungskonzentration, ein Trockenlaufen der Rohre oder Verkrustungen, die eine schlechte Wärmeübertragung und das Entstehen von Wärmespannungen verursachen können.

Bekannt sind statische und dynamische Flüssigkeitsverteilungen mit separat angeordneten Verteilerplatten und -wannen, sowie Drallkörpereinbauten in den Verdampferrohreinläufen. Darüber hinaus werden überstehende Rohrenden und Einsteckhülsen verwendet, bei denen die Heizrohrenden oder die auf die Rohrenden aufgesteckten Hülsen in der Flüssigkeitssäule stehen und bei denen die einzudampfende Flüssigkeit über die Rohroberkanten in die Heizrohre läuft. Dieser überlauf besitzt jedoch den Nachteil, daß ein großer Teil der Flüssigkeit durch die Verdampferrohre frei nach unten fällt, ohne mit der Heizwand in Berührung zu kommen. Darüber hinaus zeigen diese Konstruktionen nicht nur ein schlechtes Teillastverhalten, sondern besitzen auch keine Möglichkeit zur exakten Niveauregelung der Flüssigkeit.

In der DE 23 33 885 C3 ist schon bei Fallfilmverdampfern der eingangs genannten Art vorgeschlagen worden, daß die Drosselelemente in Form von Hohlkuglen ausgebildet sind, die auf den Öffnungen der Verdampferrohre frei aufliegen. Das Anheben und Absenken der Kugeln wird durch einen Pulsator bewirkt, der in der Verteilerkammer periodisch einen Unterdruck gegenüber dem Druck in den Rohren erzeugt. Zur Begrenzung der senkrechten Bewegung der Kugeln dient eine gelochte Begrenzungsplatte, die innerhalb der Verteilerkammern oberhalb der Kugeln und parallel zum Rohrboden angebracht ist. Die sich frei nach oben und unten bewegenden Kugeln sorgen für einen plusierenden Zustand des an den Rohren herabfließenden Filmes der zu verdampfenden Flüssigkeit, wodurch dieser Film noch verwirbelt wird. Nachteilig sind bei diesem Fallfilmverdampfer die hohen Herstellungskosten sowie die aufwendige Betriebsweise. Darüber hinaus bewirkt der pulsierende Zustand in der Regel eine Beunruhigung der Flüssigkeitsoberfläche, damit schwankende hydrostatische Drucke und als Folge hiervon eine ungleichmäßige Benetzung der Heizrohroberflächen.

Der Erfindung liegt deshalb die Aufgabe zugrunde, einen Verdampfer der eingangs erwähnten Art zu schaffen, der durch einen gleichmäßigen Einlaufquerschnitt der über die Heizrohrenden strömenden Flüssigkeit eine gleichmäßige Benetzung der Heizrohre gewährleistet, wobei der Fallstromverdampfer möglichst einfach gebaut sein soll und eine zuverlässige Leistungsregelung für jede der zu verdampfenden Flüssigkeiten ermöglicht.

Die Aufgabe wird durch einen Fallstromverdampfer der eingangs genannten Art gelöst, bei dem als Drosselelemente Schwimmkörper vorgesehen sind, die durch gleichbleibende Flüssigkeitshöhe in äquidistanter Lage von den Rohren (Rohrenden) auf der Flüssigkeit schwimmen. Im Unterschied zu dem in der eingangs genannten Patentschrift beschriebenen Fallfilmverdampfer kann auf die Bewegung der Drosselelemente steuernde Elemente wie Pulsatoren und Hubbegrenzer völlig verzichtet werden. Der bzw. die Schwimmkörper tauchen nach dem archimedischen Prinzip entsprechend tief ein, so daß über die Flüssigkeitshöhe automatisch der Abstand der Schwimmkörper von den Rohrenden bestimmt ist. Durch den ruhig schwimmenden Schwimmkörper entstehen auch keine turbulenten Flüssigkeitsbewegungen; es dringt in Abhängigkeit der Flüssigkeitshöhe durch den zwischen Rohrende und Schwimmkörper verbleibenden Spalt nur so viel Flüssigkeit in die Heizrohre wie gewünscht wird.

Nach einer Weiterbildung der Erfindung ist für alle Rohre nur ein Schwimmkörper vorgesehen, der insgesamt eine "Begradigung" der Flüssigkeitsoberfläche gewährleistet. Bevorzugt wird der oder werden die Schwimmkörper über Arretierungsvorrichtungen in im wesentlichen über die Waagerechte konstanter Lage gehalten, wobei die einfachste Arretierungsvorrichtung aus einer oder mehreren senkrecht angeordneten Stangen besteht, deren Ende in einer Bohrung des Schwimmers bzw. Bohrungen des Schwimmers eingreift.

Aus fertigungstechnischen Gründen empfiehlt es sich bei großen Fallstromverdampferanlagen mit mehreren hundert Rohren den einzigen Schwimmkörper so zu konstruieren, daß dessen Segmente über Steck- oder Schraubverbindungen zusammengehalten werden.

Bevorzugt werden gangz oder teilweise als Hohlkörper ausgebildete Schwimmkörper, da dann als Material auch solche Stoffe Verwendung finden, die spezifisch schwerer als die zu verdampfende Flüssigkeit sind. Im einfachsten Falle ist der Schwimmkörper quader- oder zylinderförmig, jeweils mit geringer Höhe.

Die bei industriell betriebenen Fallstromverdampfern üblichen Fertigungsgenauigkeiten reichen in der Regel aus, um alle Rohrenden des Fallstromverdampfers in einer Höhe enden zu lassen. Nach einer Weiterbildung der Erfindung können die in Folge von Fertigungsfehlern gegebenen ungleichen Höhenstände der oberen Rohrkanten durch über die Rohrenden aufsteckbare Hülsen ausgeglichen werden.

Schließlich ist nach einer weiteren bevorzugten Ausführungsform über die Eintauchtiefe des Schwimmers die Leistung des Verdampfers regelbar, im einfachsten Fall über die in das druckgeregelte System zurückgeführte Flüssigkeitsmenge, d.h. die in m³/h/cm meßbare zu verdampfende Lösung in die Verdampferrohre und die Konzentration geregelt werden können.

Ein Ausführungsbeispiel ist in der Zeichnung dargestellt. Es zeigen

Fig. 1 einen Fallstromverdampfer in schematischer Darstellung und

Fig. 2 einen Schnitt durch ein Heizrohrende mit aufgesteckter Hülse.

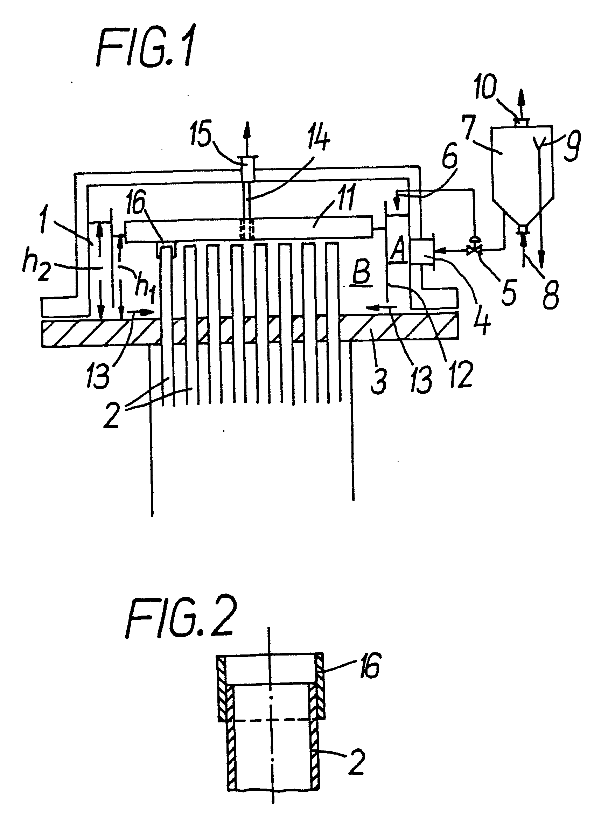

Der in Fig. 1 dargestellte Fallstromverdampfer besteht im wesentlichen aus einer Kammer 1 mit senkrecht angeordneten Heizrohren 2, die als Verdampferrohre ausgebildet in einem Rohrboden 3 stehen. Die Kammer 1 besitzt einen seitlichen Stutzen 4, über den die zu verdampfende Flüssigkeit mittels einer Zulaufregelung 5, die mit einem Höhenstandsanzeiger 6 gekoppelt ist, zugeführt wird. Als Reservoir der zu verdampfenden Flüssigkeit dient ein Vorratsbehälter 7, der in nach dem Stand der Technik bekannter Weise mit Zulaufleitungen 8, einem Überlauf 9 sowie einem Dampfabscheider 10 ausgestattet ist. Über den Enden der Heizrohre 2 schwimmt ein Schwimmkörper 11 auf der über dem Rohrboden 3 gestauten, zu verdampfenden Flüssigkeit, die durch gleichmäßig über den Umfang eines ringförmigen Leitbleches 12 vorgesehene überlauföffnungen 13 vom Raum A in den das Bündel von Heizrohren 2 enthaltenen Innenraum B gelangt. Der Schwimmkörper 11 besteht im vorliegenden Fall aus einem Kunststoffhohlkörper in Zylinderform, dessen Eintauchtiefe in die zu verdampfende Flüssigkeit sich nach dem Archimedes-Prinzip ergibt. Der Schwimmer weist etwa in Höhe seiner Längsachse eine Bohrung auf, in die eine senkrecht vom Verdampferdach ragende und dort befestigte Stange 14 als Führung eingreift, die zwar ein seitliches Verschieben des Schwimmkörpers 11 verhindert, jedoch eine vertikale Bewegung ermöglicht. Der Schwimmkörper 11 ist zudem mit einer Höhenkontrolleinrichtung 15 ausgestattet, die über den Stutzen 4 den Zulauf an zu verdampfender Flüssigkeit steuert.

Der erfindungsgemäße Fallstromverdampfer arbeitet folgendermaßen:

Über den Vorratsbehälter 7, die Zulaufregelung 5 und den Stutzen 4 wird die zu verdampfende Flüssigkeit, z.B. Saft, in den Raum A eingelassen, wobei der Höhenstandsanzeiger 6 dafür sorgt, daß die flüssigkeitsspezifische Füllstandshöhe $h_2$ nicht über- oder unterschritten wird, so daß sich ein konstanter Flüssigkeitsdruck einstellt, wodurch Flüssigkeit in den Innenraum B gepreßt wird, wo sich eine ebenfalls konstante Flüssigkeitshöhe $h_1$ einstellt. Auf der in dem Innenraum B gestauten Flüssigkeit schwimmt der Schwimmkörper 11, der im Hinblick auf das spezifische Gewicht der Flüssigkeit so ausgewählt ist, daß zwischen seiner Unterkante und den Rohrenden ein Spalt der gewünschten Breite s entsteht. Z.B. bei Zuckersäften beträgt die Spaltbreite 5 mm.

Große Fallstromverdampfer besitzten bei Verdampferflächen von 400 bis 3500 m² ca. 660 bis 3500 Rohre 2, so daß sich eine Schwimmkörperbodenoberfläche bis zu 3,3 m Durchmesser ergibt. Sollte die Fertigungsgenauigkeit bei den Rohrenden, die alle gleich hoch abschließen müssen, nicht ausreichen, bietet es sich an, auf die Enden der zu kurzen Rohre gemäß Fig. 2 eine Aufsteckhülse 16 zum Höhenausgleich aufzusetzen.

## Patentansprüche

1. Fallstromverdampfer mit in Rohrböden (3) befestigten, beheizbaren Rohren (2), mit einer Verteilerkammer (1) im oberen Teil des Verdampfers zum Zufürhen und gleichmäßigem Verteilen der Flüssigkeit auf die Rohre des Verdampfers und mit Drosselelementen (11), die mit den Rohrenden des Verdampfers Ringspalte bilden, wodurch die einzudampfende Flüssigkeit den Innenflächen der Rohre (2) zugeführt wird, dadurch gekennzeichnet, daß als Drosselelemente Schwimmkörper vorgesehen sind, die durch gleichbleibende Flüssigkeitshöhe in äquidistanter Lage von den Rohren (2) auf der Flüssigkeit schwimmen.

2. Fallstromverdampfer nach Anspruch 1, dadurch gekennzeichnet, daß für alle Rohre (2) nur ein Schwimmkörper (11) vorgesehen ist.

3. Fallstromverdampfer nach Ansprüchen 1 oder 2, dadurch gekennzeichnet, daß der oder die Schwimmkörper (11) über eine Arretierungsvorrichtung (14) in im wesentlichen über die Waagerecht konstanter Lage gehalten werden.

4. Fallstromverdampfer nach einem der Ansprüche 1 bis 3, dadurch gekennzeichnet, daß die Arretierungsvorrichtung aus einer senkrecht angeordneten Stange (14) besteht, deren Ende in eine Bohrung des Schwimmers (11) eingreift.

5. Fallstromverdampfer nach einem der Ansprüche 1 bis 4, dadurch gekennzeichnet, daß der Schwimmkörper (11) aus Segmenten besteht, die über Steck- der Schraubverbindungen zusammengehalten werden.

6. Fallstromverdampfer nach einem der Ansprüche 1 bis 5, dadurch gekennzeichnet, daß der Schwimmkörper (11) ganz oder zum Teil als Hohlkörper ausgebildet ist.

7. Fallstromverdampfer nach einem der Ansprüche 1 bis 6, gekennzeichnet durch einen quader- oder zylinderförmigen Schwimmkörper.

8. Fallstromverdampfer nach einem der Ansprüche 1 bis 7, dadurch gekennzeichnet, daß die infolge von Fertigungsfehlern (-toleranzen) gegebenen ungleichen Höhenstände der oberen Rohrkanten durch über die Rohrenden aufsteckbare Hülsen (16) ausgeglichen sind.

9. Fallstromverdampfer nach einem der Ansprüche 1 bis 8, dadurch gekennzeichnet, daß über die Eintauchtiefe des Schwimmers (11) die zuzuführende Menge der zu verdampfenden Lösung in die Verdampferrohre und die Konzentration geregelt werden können.

**Revendications**

1. Evaporateur à courant inversé, comportant des tubes (2) chauffables fixés dans des plateaux à tubes (3), comportant une chambre de distribution (1) dans la partie supérieure de l'évaporateur port l'arrivée et la distribution également répartie du liquide sur les tubes de l'évaporateur et comportant des organes d'étranglement (11), qui, avec les extrémités des tubes de l'évaporateur, forment des passages annulaires, par lesquels le liquide à évaporer est dirigé vers les surfaces internes des tubes (2), caractérisé en ce que sont prévus, comme organes d'étranglement des corps de flotteurs qui, au moyen d'un niveau en hauteur du liquide restant constant, flottent sur le liquide, dans une position équidistante des tubes (2).

2. Evaporateur à courant inversé suivant la revendication 1, caractérisé en ce que, pour tous les tubes (2), seulement un corps de flotteur (11) est prévu.

3. Evaporateur à courant inversé suivant la revendication 1 ou la revendication 2, caractérisé en ce que le ou les corps de flotteur (11) sont maintenus au moyen d'un dispositif de butée (14) dans une position essentiellement constante par rapport à l'horizontale.

4. Evaporateur à courant inversé suivant l'une quelconques des revendications 1 à 3, caractérisé en ce que le dispositif de butée est constitué d'une tige disposée verticalement, dont l'extrémité pénètre dans un alésage du corprs de flotteur (11).

5. Evaporateur à courant inversé suivant l'une quelconque des revendications 1 à 4, caractérisé en ce que le corps de flotteur (11) est constitué de segments qui sont maintenus ensemble au moyen de liaisons par emboîtements ou par vissage.

6. Evaporateur à courant inversé suivant l'une quelconque des revendications 1 à 5, caractérisé en ce que le corps de flotteur (11) est réalisé, en totalité ou en partie, sous forme d'un corps creux.

7. Evaporateur à courant inversé suivant l'une quelconque des revendications 1 à 6, caractérisé par un corps de flotteur de forme parallélépipèdique ou cylindrique.

8. Evaporateur à courant inversé suivant l'une quelconque des revendications 1 à 7, caractérisé en ce que les positions inégales en hauteur des arêtes supérieures des tubes, dues à des défauts de fabrication (tolérances) sont rattrapées par des douilles (16) pouvant être emboîtées sur les extrémités des tubes.

9. Evaporateur à courant inversé suivant l'une quelconque des revendications 1 à 8, caractérisé en ce qu'au moyen de la profondeur de l'enfoncement du corps de flotteur (11), on peut réguler la quantité de solution à vaporiser à admettre dans les tubes de l'évaporateur et la concentration.

**Claims**

1. A fall stream evaporator having: heatable tubes (2) secured in tube plates (3); a distributor chamber (1) in the upper portion of the evaporator for supplying and evenly distributing the liquid to the tubes of the evaporator; and throttling elements (11) which cooperate with the tube ends of the evaporator to form annular gaps through which the liquid to be evaporated is supplied to the inner surfaces of the tubes (2), characterized in that the throttling elements provided are floaters which due to the constant level of the liquid float on the liquid in an equidistant position from the tubes (2).

2. A fall stream evaporator according to claim 1, characterized in that only one floater (11) is provided for all the tubes (2).

3. A fall stream evaporator according to claims 1 or 2, characterized in that the or each floater (11) is retained by a locking device (14) in a substantially constant position over the horizontal.

4. A fall stream evaporator according to one of claims 1 to 3, characterized in that the locking device comprises a vertically disposed rod (14) whose end engages in a bore in the floater (11).

5. A fall stream evaporator according to one of claims 1 to 4, characterized in that the floater (11) consists of segments which are held together by plug-in or screwed connections.

6. A fall stream evaporator according to one of claims 1 to 5, characterized in that the floater (11) is constructed partially or wholly in the form of a hollow member.

7. A fall stream evaporator according to one of claims 1 to 6, characterized by a parallelepipedic or cylindrical floater.

8. A fall stream evaporator according to one of claims 1 to 7, characterized in that the levels of the upper tube edges, which are uneven due to manufacturing faults (tolerances), are evened out by sleeves (16) which can be slipped over the tube ends.

9. A fall stream evaporator according to one of claims 1 to 8, characterized in that the quantity to be supplied of the solution to be introduced into the evaporator tubes for evaporation and the concentration can be controlled via the depth of immersion of the floater (11).

# FIG.1

# FIG.2